# EUROPEAN PATENT SPECIFICATION

(11) **EP 1 138 542 B1**
(45) Date of publication and mention of the grant of the patent: **02.11.2006**
(21) Application number: 01850055.3
(22) Date of filing: 26.03.2001
(51) Int. Cl.: B60K 15/035, B60K 15/077, B60K 15/03

(54) **Fuel tank arrangement comprising at least two fuel tanks**
Tankeinrichtung mit mindestens zwei Kraftstofftanks
Dispositif de réservoir à carburant comportant au moins deux réservoirs à carburant

(30) Priority: 27.03.2000 SE 0001059
(43) Date of publication of application: 04.10.2001
(73) Proprietor: Scania CV Aktiebolag (publ), 151 87 Södertälje (SE)
(72) Inventor: Bergman, Hans, 641 37 Katrineholm (SE); Davidsson, Karl-Gustav, 641 53 Katrineholm (SE); Wall, Mats, 641 50 Katrineholm (SE)

(56) References cited:
- DE-A- 3 342 871
- DE-A- 4 311 470
- DE-A- 19 836 121
- PATENT ABSTRACTS OF JAPAN vol. 018, no. 119 (M-1567), 25 February 1994 (1994-02-25) -& JP 05 310050 A (HORIE KINZOKU KOGYO KK), 22 November 1993 (1993-11-22)
- PATENT ABSTRACTS OF JAPAN vol. 018, no. 292 (M-1615), 3 June 1994 (1994-06-03) -& JP 06 055944 A (TOYOTA MOTOR CORP), 1 March 1994 (1994-03-01)

## Description

### BACKGROUND TO THE INVENTION AND STATE OF THE ART

The invention relates to a fuel tank arrangement comprising at least two fuel tanks as described in the preamble to patent claim 1.

Such fuel tank arrangements are known and are used in buses, for example. Buses usually contain three fuel tanks that are connected together so that fuel need only be filled at one place. There is usually one upper and one lower fuel tank on the first side of the bus and a further fuel tank on the other side of the bus. When the bus is refuelled, the fuel passes through the filler pipe into the upper fuel tank on the first side of the bus. Then the fuel is lead from the upper fuel tank to the lower tank on the first side. After this, a part of the fuel, at any rate, is lead to the fuel tank on the other side of the bus. To equalise the pressure differences in the fuel tanks that occur due to refuelling and fuel consumption, there is a vent pipe from the fuel tank on the other side of the bus to the fuel filler pipe on the first side of the bus. The filler pipe is connected to the upper fuel tank and air can thus flow freely in the vent pipe between the fuel tanks on the respective sides of the bus. The same pressure can thus essentially be maintained in the tanks.

If fuel in liquid form gets into such a vent pipe by mistake, there is a risk of fuel collecting at certain places in the pipe. There is thus a risk of the vent pipe becoming blocked because the fuel has collected at certain places in the pipe. This in turn can prevent the free flow of air in the vent pipe.

An example of a fuel tank arrangement is referred to in JP 5 310050 which discloses an arrangement with one fuel tank. The fuel tank has two crest parts and one recess part between the crest parts. An air-communication tube is arranged within the fuel tank to allow airflow between the crest parts during filling of fuel. The purpose of the pipe is to balance airpressure arising by air being compressed during filling of fuel and thus enabling uniform filling of the tank up to a certain level. The tube is arranged so that there is a dip having a cross section area greater than that of the tube for collecting excess fuel, which has escaped into the tube, so that it does not block the airflow. This solution is directed at an arrangement for communicating air within parts of the same tank and as such has restrictions as to the level of fuel that can be filled in the tank without the tube being blocked by fuel. Also, the air-communication tube of this solution cannot, for practical reason, be provided with an opening having a removable sealing device for removing excess fuel in the tube should it block the airflow.

### SUMMARY OF INVENTION

The object of this invention is to furnish a fuel arrangement in which the airflow in the vent pipe mentioned above is guaranteed even if fuel in liquid form is present and collects in the pipe.

This object is achieved by the fuel arrangement according to claim 1. As there is a dip in the pipe, any fuel in liquid form in the pipe runs down and collect at the lowest part of the dip in the pipe. There is thus no risk of other parts of the pipe becoming blocked by the fuel. The part of the pipe forming the dip has a relatively large internal cross-sectional area, which considerably reduces the risk of the pipe becoming blocked by the fuel that has collected there. When the pipe contains a normal amount of collected fuel, the air can flow without problem above the fuel that has collected in the dip.

According to the invention, at the dip in the pipe mentioned above the internal cross-sectional area of the pipe is enlarged at least in one direction downward relative to the internal cross-sectional area of the adjacent parts of the pipe. The liquid fuel collects in such a downward extending space due to gravity. An airflow can therefore flow in the pipe through the dip and above the space. The fuel that collects can be retained and prevented from swishing about in the pipe by shaping the space in a suitable way. It is advantageous if the pipe contains a horizontal stretch at the lowest part of the dip. This horizontal stretch of pipe provides the lowest part of the pipe level with an extended pipe section in which the fuel that collects in the dip can spread out. In this way a relatively large amount of fuel can collect at the lowest part of the dip with no risk of the pipe becoming blocked. The extension is limited downward by a bottom surface. Thus the fuel collects in a space in the form of an essentially open vessel. According to the invention to ensure that the amount of fuel that collects in the dip is not excessive there is an opening in the above mentioned bottom surface that can be closed by a sealing device. Such a sealing device can consist of a plug or similar, which is arranged so it can be occasionally removed so that the fuel collected in the dip can be drained through the opening.

According to another preferred embodiment of the invention, the pipe contains orifices near the connection to the first and the second fuel tanks and that the pipes from each of these orifices have an upward slope until the pipe reaches a locally highest pipe level. Because of the upward slope from the orifices, essentially all the fuel that is forced into the pipe is lead immediately out again by gravity. It is advantageous if the pipe contains a valve, at least in one of the upward sloping stretches mentioned above, that is arranged to prevent the passage of gaseous substances. Particularly if the second fuel tank is positioned at a lower level than the first tank, it is suitable to arrange such a valve in the pipe near the connection to the second fuel tank. The level to which the fuel is allowed to rise in the pipe is limited in this way. It is advantageous if the pipe contains a downward sloping stretch from each of the highest pipe levels mentioned above to the above mentioned dip. With a downward slope from the highest pipe levels, any fuel that has been forced into the pipe and past the highest pipe levels runs down into the dip and collect at the lowest pipe level in the dip. It is possible that fuel is forced into the pipe when fuel in gaseous form condenses in the pipe.

According to another preferred embodiment of the invention, the first fuel tank is arranged to be filled with fuel via a filler pipe and the pipe includes a first orifice in the above mentioned filler pipe and a second orifice in the second fuel tank. The filler pipe is connected to the first fuel tank. This allows an airflow between the second fuel tank and the first fuel tank so that any differences in pressure can be equalised between the fuel tanks.

### BRIEF DESCRIPTION OF THE DRAWING

In the following text, examples are described as a preferred embodiment of the invention, with reference to the enclosed drawing, in which:
- Fig 1: shows a fuel arrangement according to a preferred embodiment of the invention.
- Fig 2: shows a cross-section through the dip in the pipe shown in Fig 1.

### DETAILED DESCRIPTION OF A PREFERRED EMBODIMENT OF THE INVENTION

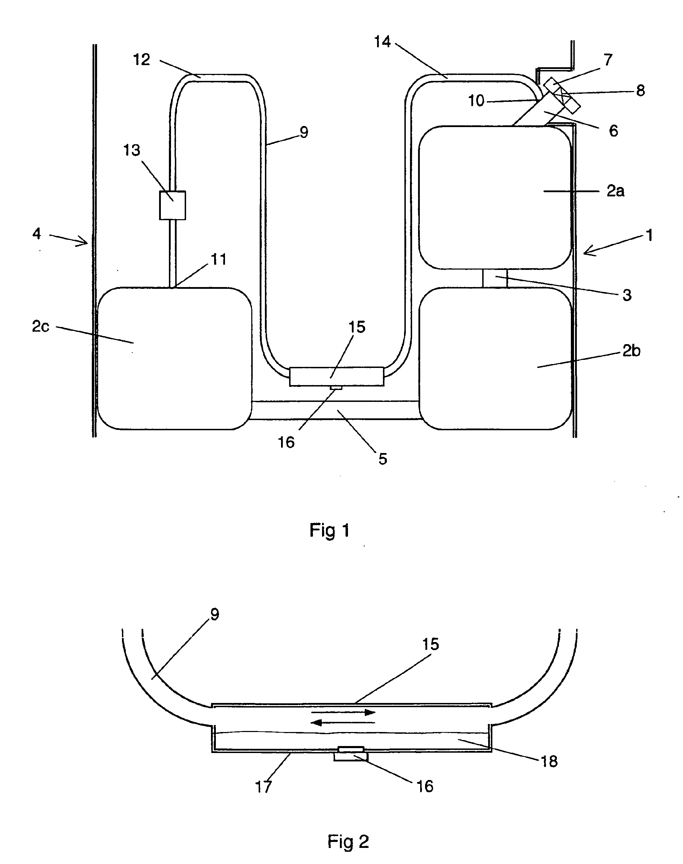

Fig 1 shows schematically a fuel tank arrangement that is fitted in a bus. The invention can also be used in other types of motor vehicle such as trucks. The fuel tank arrangement includes an upper fuel tank 2a and a lower fuel tank 2b on the first side 1 of the bus. The fuel tanks 2a and 2b are joined together by a pipe 3. On the other side of the bus 4 there is a further fuel tank 2c. The fuel tanks 2b and 2c are joined together by a pipe 5. The fuel tank 2c is located essentially at the same level as the lower fuel tank 2b on the first side 1 of the bus. On the top side of the upper fuel tank 2a there is a filler pipe 6. The lower opening of the filler pipe 6 opens into the upper fuel tank 2a. At the upper opening of the filler pipe there is a filler cap 7 which can be tightened to seal the filler pipe. The filler cap 7 contains an under-pressure valve 8. There is a pipe 9 that allows an airflow between the upper fuel tank 2a on the first side 1 of the bus and fuel tank 2c on the other side 4 of the bus. The pipe 9 includes a first orifice 10, which opens into the filler pipe 6 and is connected to the upper fuel tank 2a, and a second orifice 11, which opens into fuel tank 2c. From the orifice 11, the pipe 9 runs essentially vertically upward until it reaches a local highest pipe level 12. In the essentially vertical section of the pipe 9 there is a valve 13, the function of which is to prevent the passage of liquid but to allow the passage of air. From the local highest pipe level 12, the pipe 9 continues downward until it reaches a lowest pipe level where there is a horizontal stretch of pipe. In a corresponding way, the pipe 9 runs upward from the first orifice 10 until the pipe 9 reaches a local highest pipe level 14. From this highest pipe level 14 the pipe 9 runs downward for a stretch until it reaches the above mentioned lowest pipe level where there is a horizontal stretch of pipe corresponding to that from the pipe of the other side. The pipe 9 thus has a dip between the local highest pipe levels 12 and 14. At the lowest pipe level in the dip of pipe 9, there is a container 15 designed like a vessel. The container 15 runs essentially horizontally and its internal cross-sectional area is greater than that of the other parts of pipe 9. The container 15 extends the cross-sectional area of pipe 9 mainly downward relative to the adjacent pipe sections. The container 15 includes an opening than can be closed with a sealing device 16.

When refuelling the fuel tanks 2a-c in the bus, the filler cap is removed to uncover the upper opening of the filler pipe 7. The fuel flows initially from filler pipe 6 down into the upper fuel tank 2a on the first side 1 of the bus. From fuel tank 2a, the fuel flows via pipe 3 down into the lower fuel tank 2b. From fuel tank 2b, at least part of the fuel flows via pipe 5 to fuel tank 2c, which is located on the other side 4 of the bus. As the lower fuel tank 2b on the first side 1 of the bus and fuel tank 2c on the other side 4 of the bus are located at essentially similar levels, the fuel level rises essentially equally in fuel tanks 2b and 2c. When the lower fuel tanks 2b and 2c are full, the fuel level starts to rise in the upper fuel tank 2a. At the same time, the fuel level in pipe 9 rises at its connection to fuel tank 2c. The fuel level in pipe 9 rises here until it reaches the valve 13. This valve 13 is designed to prevent the passage of substances in liquid form but to allow the passage of gaseous substances. The valve 13 thus prevents the fuel level rising higher in pipe 9. Refuelling continues until the upper fuel tank 2a is full. During refuelling, the air enclosed in the upper fuel tank 2a and the lower fuel tank 2b is forced upward and out to atmosphere through the filler pipe 6. As the fuel level rises in fuel tank 2c on the other side 4 of the bus, the air enclosed in the tank flows through the opening 11 into pipe 9, through the pipe to opening 10 and into the filler pipe 6. The air then flows up the filler pipe 6 and through its upper opening to atmosphere. Pipe 9 thus functions in such a way that the air pressure in fuel tanks 2a-c is kept essentially at a similar level.

When the bus is in operation and the fuel level in the fuel tanks drops, the air pressure in the fuel tanks 2a-c is kept in a corresponding way at an essentially similar level by pipe 9. When the fuel level in tank 2c drops, pipe 9 allows air to flow from the filler pipe 6 to fuel tank 2c. The air pressure in the filler pipe 6 is similar to the air pressure in fuel tank 2a. When the under-pressure in the filler pipe 6 reaches a predetermined level, the under-pressure valve 8 in the filler cap 7 allows air to flow through the filler cap 7 into the fuel tanks 2a-c.

Under normal circumstances, fuel is prevented from being forced into and collecting in the pipe 9. The valve 13 prevents, for example, the fuel level from rising too high in the pipe 9. As pipe 9 runs upward from the first orifice 10 in the filler pipe 6 and from the second orifice 11 in fuel tank 2c, any fuel forced into pipe 9 turns and falls by its own weight and runs down and out through the orifices 10,11 at the ends of pipe 9. If contrary to expectation some fuel should splash up into pipe 9, during refuelling for example, so that it reaches and passes the highest pipe level 14, this fuel runs down by gravity into the dip in pipe 9, which is located between the highest pipe levels 12 and 14 and collects in the container 15. It is possible that fuel in gaseous form can condense into liquid fuel in pipe 9. Any such fuel that has condensed in pipe 9, between the highest pipe levels 12 and 14, runs downward in pipe 9 to the container 15, which is located at the lowest part of the dip in the pipe.

A cross-section of the container 15, which is located at the lowest pipe level in the dip, is shown in Fig 2. The container 15 forms a part of the pipe that stretches horizontally. Its internal cross-sectional area is greater than that of the other parts of pipe 9. Above all, in container 15 the internal cross-sectional area widens in a downward direction compared to the internal cross-sectional area of the adjacent parts of pipe 9. Container 15 includes a bottom surface 17 that limits the widening downward. Container 15 includes an essentially upward open vessel inside the pipe 9 where the fuel is allowed to collect. Because container 15 has a greater internal cross-sectional area compared to pipe 9, at the same time as it is horizontal longitudinally, this forms a space in container 15 with a relatively large volume in which fuel can collect. In this way an airflow can be achieved in pipe 9 above the collected fuel 18. However, the fuel that collects in container 15 must be emptied occasionally to ensure a free flow of air through the container 15. Therefore, there is an opening in the bottom surface 17 of container 15. The opening is equipped with a sealing device 16. The fuel 18 that collects in the container 15 can be drained by releasing and removing the sealing device 16.

The invention is not in any way limited to the embodiment depicted on the drawing but can be varied freely within the framework of the patent claims. For example, the above mentioned widening of the internal cross-sectional area of pipe 9 need not have the form of a container 15 but can have an essentially arbitrary design and shape. The lower fuel tank 2b on the first side of the bus can if required include a pipe 9, in a similar way to fuel tank 2c. The pipe 9 can also be located in such a way to include more than one dip where fuel can be collected.

## Claims

1. Fuel tank arrangement for motor vehicles including at least two fuel tanks, in which the fuel tank arrangement includes a first fuel tank (2a) that receives the fuel during refuelling, at least one second fuel tank (2c) that is connected to the first fuel tank (2a) to allow the fuel to flow between the fuel tanks (2a, 2c), and a pipe (9) which is arranged to allow an airflow between the first (2a) and the second (2c) fuel tanks, and the pipe (9) is located so that there is a dip at least at one position and that at the above mentioned dip, the internal cross-sectional area of the pipe (9) is greater than that of the other parts of the pipe (9), furthermore the pipe (9) at the above mentioned dip includes a widening of the internal cross-sectional area at least in one direction downward compared to the internal cross-sectional area of the adjacent parts of the pipe, and the widening downward is limited by a bottom surface (17), whereby the bottom surface is equipped with an opening (17) and a removable sealing device (16) is used to close this opening.

2. Fuel tank arrangement according to claim 1, whereby the pipe (9) includes a horizontal stretch at the lowest pipe level in the dip.

3. Fuel tank arrangement, according to one of the claims described above, whereby the pipe (9) includes orifices (10, 11) positioned at the connections to the first (2a) and the second (2c) fuel tanks, and from each of the orifices (10, 11) the pipe (9) runs upward until the pipe (9) reaches at least a local highest pipe level (12, 14).

4. Fuel tank arrangement according to claim 3, whereby the pipe (9) includes, at least in one of the above mentioned upward running stretches, a valve (13) that prevents the passage of substances in liquid form but allows the passage of gaseous substances.

5. Fuel tank arrangement according to one of the claims 3 and 4, whereby the pipe (9) includes a downward running stretch from each of the above mentioned highest pipe levels (12, 14) to the above mentioned dip.

6. Fuel tank arrangement according to one of the preceding claims, whereby the first fuel tank (2a) is filled with fuel via a filler pipe (6), and the pipe (9) has a first orifice (10) in this filler pipe (6) and a second orifice (11) in the second fuel tank (2c).

## Patentansprüche

1. Kraftstofftankanordnung für Kraftfahrzeuge mit wenigstens zwei Kraftstofftanks, wobei die Kraftstofftankanordnung einen ersten Kraftstofftank (2a), der Kraftstoff während eines Befüllens aufnimmt, wenigstens einen zweiten Kraftstofftank (2c), der mit dem ersten Kraftstofftank (2a) verbunden ist, um einen Kraftstofffluss zwischen den beiden Kraftstofftanks (2a, 2c) zu ermöglichen, und ein Rohr (9) aufweist, das derart angeordnet ist, dass es einen Luftstrom zwischen dem ersten (2a) und dem zweiten (2c) Kraftstofftank zulässt, wobei das Rohr (9) derart angeordnet ist, dass an wenigstens einer Stelle eine Senke vorliegt und dass an der genannten Senke die Innenquerschnittsfläche des Rohrs (9) größer ist, als die anderer Abschnitte des Rohrs (9), wobei ferner das Rohr (9) an der genannten Senke verglichen zu der Innenquerschnittsfläche benachbarter Abschnitte des Rohrs eine Aufweitung der Innenquerschnittsfläche in wenigstens einer Richtung abwärts aufweist und wobei die Aufweitung abwärts durch eine Bodenfläche (17) begrenzt ist, wobei die Bodenfläche mit einer Öffnung (17) versehen ist und wobei eine entfernbare Dichtungsvorrichtung (6) zum Verschließen dieser Öffnung eingesetzt ist.

2. Kraftstofftankanordnung nach Anspruch 1, wobei das Rohr (9) einen elastischen Abschnitt auf dem tiefstliegenden Rohrniveau in der Senke aufweist.

3. Kraftstofftankanordnung nach einem der vorangehenden Ansprüche, wobei das Rohr (9) Öffnungen (10, 11) aufweist, die an Verbindungen zu dem ersten (2a) und dem zweiten (2c) Kraftstofftank angeordnet sind, und wobei von jeder der Öffnungen (10, 11) das Rohr (9) in Richtung nach oben verläuft, bis das Rohr (9) wenigstens ein lokal am höchsten gelegenes Rohrniveau (12, 14) erreicht.

4. Kraftstofftankanordnung nach Anspruch 3, wobei das Rohr (9) in wenigstens einem der vorstehenden genannten nach oben verlaufenden Abschnitte ein Ventil (13) aufweist, das das Hindurchtreten von Substanzen in flüssiger Form verhindert, jedoch das Hindurchtreten von gasförmigen Substanzen zulässt.

5. Kraftstofftankanordnung nach einem der Ansprüche 3 und 4, wobei das Rohr (9) ausgehend von jedem der genannten am höchsten liegenden Rohrniveaus (12, 14) einen nach unten verlaufenden Abschnitt zu der genannten Senke aufweist.

6. Kraftstofftankanordnung nach einem der vorangehenden Ansprüche, wobei der erste Kraftstofftank (2a) mit Kraftstoff über ein Füllrohr (6) befüllbar ist und wobei das Rohr (9) eine erste Öffnung (10) in diesem Füllrohr (6) und eine zweite Öffnung (11) in dem zweiten Kraftstofftank (2c) aufweist.

## Revendications

1. Agencement de réservoir de carburant pour véhicules à moteur comprenant au moins deux réservoirs de carburant, dans lequel l'agencement de réservoir de carburant comprend un premier réservoir de carburant (2a) qui reçoit du carburant pendant la recharge de carburant, au moins un deuxième réservoir de carburant (2c) qui est relié au premier réservoir de carburant (2a) pour permettre au carburant de s'écouler entre les réservoirs de carburant (2a, 2c) et un tuyau (9) qui est agencé pour permettre un écoulement d'air entre le premier réservoir de carburant (2a) et le deuxième réservoir de carburant (2c) et le tuyau (9) est situé afin qu'il y ait une inclinaison au moins dans une position et que dans l'inclinaison mentionnée ci-dessus, l'étendue en section transversale interne du tuyau (9) soit supérieure à celle des autres parties du tuyau (9), en outre le tuyau (9) à l'inclinaison mentionnée ci-dessus comprend un élargissement de l'étendue de section transversale interne au moins dans une direction vers le bas comparativement à l'étendue de section transversale interne des parties contiguës du tuyau et l'élargissement vers le bas est limité par une surface de fond (17), dans lequel la surface de fond est munie d'une ouverture (17) et un dispositif d'étanchéification amovible (16) est utilisé pour fermer cette ouverture.

2. Agencement de réservoir de carburant selon la revendication 1, dans lequel le tuyau (9) comprend un rétrécissement horizontal au niveau du tuyau le plus bas dans l'inclinaison.

3. Agencement de réservoir de carburant selon l'une des revendications précédentes, dans lequel le tuyau (9) comprend des orifices (10, 11) positionnés aux liaisons du premier réservoir de carburant (2a) et du deuxième réservoir de carburant (2c) et à partir de chacun des orifices (10, 11) le tuyau (9) s'étend vers le haut jusqu'à ce que le tuyau (9) atteigne au moins un niveau de tuyau le plus élevé local (12, 14).

4. Agencement de réservoir de carburant selon la revendication 3, dans lequel le tuyau (9) comprend au moins dans l'un des rétrécissements s'étendant vers le haut mentionnés plus haut un clapet (13) qui empêche le passage de substances sous forme liquide mais permet le passage de substances gazeuses.

5. Agencement de réservoir de carburant selon l'une des revendications 3 et 4, dans lequel le tuyau (9) comprend un étirement s'étendant vers le bas à partir de chacun des niveaux de tuyau les plus élevés mentionnés ci-dessus (12, 14) à l'inclinaison mentionnée plus haut.

6. Agencement de réservoir de carburant selon l'une des revendications précédentes, dans lequel le premier réservoir de carburant (2a) est rempli avec du carburant par l'intermédiaire d'un tuyau de remplissage (6) et le tuyau (9) présente un premier orifice (10) dans ce tuyau de remplissage (6) et un deuxième orifice (11) dans le deuxième réservoir de carburant (2c).
